# DEMANDE DE BREVET EUROPEEN

(11) **EP 2 353 917 A1**
(43) Date de publication de la demande: **10.08.2011**
(21) Numéro de dépôt: 11152973.1
(22) Date de dépôt: 01.02.2011
(51) Int. Cl.: B60K 17/02, B60K 17/04, B60K 17/22, B60K 17/35

(54) **Dispositif d'accouplement du pont arriere d'un vehicule a quatre roues motrices permettant un desaccouplement rapide**

(30) Priorité: 03.02.2010 FR 1050750
(71) Demandeur: Peugeot Citroën Automobiles SA, 78140 Vélizy-Villacoublay (FR)
(72) Inventeur: Lavoisier, Jean-Marie, 95270, Luzarches (FR); Giannoni, Marc, 75009, PARIS (FR)

(57) **Abrégé**

L'invention se rapporte à un dispositif d'accouplement entre un arbre de transmission longitudinal (2) et le pont arrière (1) d'un véhicule automobile à quatre roues motrices, le dispositif permettant le désaccouplement de l'arbre de transmission (2) et du pont arrière (1), caractérisé en ce qu'il comprend un train épicycloïdal (3) comprenant un carter (11) solidaire du châssis du véhicule, à l'intérieur duquel sont disposés :
- un planétaire (5) lié en rotation à l'arbre longitudinal (2) ;
- un porte-satellite (6) portant un satellite (7) et solidaire d'un pignon conique (8) engrenant avec une couronne conique (9) du pont arrière (1) ;
- une couronne (4) liée en rotation au carter (11) par l'intermédiaire d'un dispositif de liaison débrayable (12, 13, 14).

## Description

La présente invention se rapporte au domaine des véhicules automobiles possédant au moins deux essieux moteurs, soit au moins quatre roues motrices. L'invention concerne plus particulièrement les véhicules dits « 4x4 » ou à « transmission intégrale », c'est-à-dire comportant quatre roues motrices pour quatre roues au total. Un tel véhicule comporte généralement un arbre de transmission longitudinal entre la boîte de vitesses ou l'essieu avant et l'essieu arrière, permettant de transmettre le couple moteur à l'essieu arrière.

Un des problèmes posés par une transmission intégrale est que, lorsque l'essieu arrière se trouve bloqué, celui-ci étant en liaison cinématique avec la boîte de vitesses du véhicule, le blocage de l'essieu arrière provoque le calage du moteur. Un tel blocage peut être involontaire, par exemple en utilisation sur terrain accidenté, ou volontaire, par exemple en utilisation de type « rallye », pour effectuer un virage glissé. On connait diverses solutions pour pallier ce problème.

Par exemple, on connait des dispositifs de désaccouplement rapide à commande hydraulique permettant de désaccoupler l'arbre de transmission longitudinal de l'essieu arrière en cas de blocage de ce dernier. Généralement, un tel dispositif est positionné à l'entrée du pont arrière et monté en série sur l'arbre. Le rôle de ce dispositif est de supprimer la liaison cinématique et mécanique entre l'essieu avant et l'essieu arrière en cas de besoin.

Ce type de dispositif présente néanmoins plusieurs inconvénients majeurs. En premier lieu, l'interposition d'un tel dispositif entre l'arbre de transmission longitudinal et le pont arrière implique une augmentation de volume importante du pont arrière. En particulier, il est souvent nécessaire d'augmenter fortement la longueur du pont au niveau de son extrémité arrière. Cela nécessite en outre une adaptation de la forme et du cheminement du tuyau d'échappement ainsi que de la forme du réservoir, éléments situés à proximité immédiate du pont arrière. Ensuite, l'arbre longitudinal étant une pièce tournante, le mécanisme de désaccouplement nécessite de nombreux roulements et butées à aiguilles pour supporter la transmission des efforts entre les pièces fixes (notamment le vérin hydraulique de commande) et les pièces mobiles (disques de friction, ressort de précharge et système de précontrainte). De plus, ce mécanisme ajoute de la masse et également de l'inertie sur les pièces mobiles.

Enfin, la démultiplication au niveau du pont arrière, est généralement l'ordre de 1/3, et c'est un couple conique spiroïdal qui assure la démultiplication finale, avec pour conséquence un arbre longitudinal qui tourne à des vitesses élevées (notamment supérieures à 4 000 tr/mn). Il est alors nécessaire de veiller soigneusement à assurer un équilibrage dynamique des pièces du dispositif de désaccouplement rapide.

L'invention se propose de pallier les inconvénients exposés ci-dessus.

Ainsi, l'invention concerne un dispositif d'accouplement entre un arbre de transmission longitudinal et le pont arrière d'un véhicule automobile à quatre roues motrices, le dispositif permettant le désaccouplement de l'arbre de transmission et du pont arrière, caractérisé en ce qu'il comprend un train épicycloïdal comprenant un carter solidaire du châssis du véhicule, à l'intérieur duquel sont disposés :
- un planétaire lié en rotation à l'arbre longitudinal ;
- un porte-satellite portant un satellite et solidaire d'un pignon conique engrenant avec une couronne conique du pont arrière ;
- une couronne liée en rotation au carter par l'intermédiaire d'un dispositif de liaison débrayable.

Dans une réalisation, le dispositif de liaison débrayable est un embrayage.

Dans une réalisation, le dispositif de liaison débrayable est un embrayage à disques de type humide.

Dans une réalisation, le dispositif de liaison débrayable comprend un empilement de disques de friction alternativement liés au carter et à la couronne, un ressort de précharge pour que l'embrayage soit en position normalement fermée, et un actionneur hydraulique, tel qu'un piston hydraulique, pour ouvrir l'embrayage.

Dans une réalisation, la valeur de tarage du ressort de précharge est supérieure ou égale au couple maximum admissible par le pont arrière.

Dans une réalisation, la démultiplication du train épicycloïdal est proche de la démultiplication finale souhaitée pour le pont arrière, de sorte que la démultiplication de l'engrenage entre le pignon conique et la couronne conique peut être choisie proche de l'unité.

L'invention concerne également un véhicule automobile à quatre roues motrices, pourvu d'un dispositif tel que défini ci-dessus.

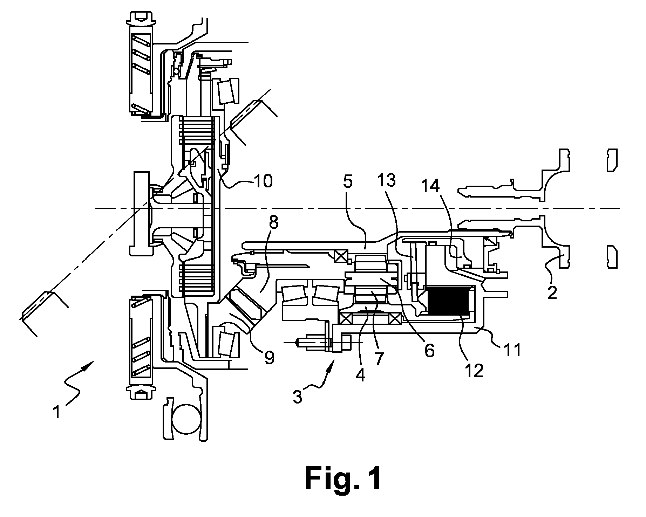

L'invention sera mieux comprise à la lecture de la description détaillée qui suit, description faite en référence à la figure 1 ci-annexée, qui représente un schéma en coupe d'un pont arrière de véhicule à quatre roues motrices pourvu d'un dispositif conforme à l'invention.

La figure 1 montre le dispositif selon l'invention disposé entre un arbre de transmission longitudinal 2 et un pont arrière 1. Conformément à l'invention, la liaison cinématique entre l'arbre de transmission longitudinal 2 et l'essieu arrière est réalisée au moyen d'un train épicycloïdal 3. Celui-ci comporte une couronne 4, un planétaire 5 et un porte-satellite 6 portant un satellite 7. En sortie du train épicycloïdal 3, le porte-satellite 6 est solidaire d'un pignon conique 8 engrenant avec une couronne conique 9 liée en rotation à l'ensemble différentiel 10 du pont arrière 1. Ainsi, le train épicycloïdal 3 est apte à transmettre le mouvement de rotation de l'arbre de transmission longitudinal 2 à l'essieu arrière.

Conformément à l'invention, la liaison cinématique entre l'arbre longitudinal 2 et l'essieu arrière peut être interrompue par désaccouplement rapide du pont arrière. Ce désaccouplement est obtenu grâce à la couronne 4 du train épicycloïdal qui est débrayable. A cette fin, la couronne 4 est liée au carter 11 du train épicycloïdal (lui-même solidaire du châssis du véhicule) par l'intermédiaire d'un dispositif de liaison débrayable. Dans l'exemple, le dispositif de liaison débrayable est un embrayage, comprenant une pluralité de disques de friction 12 empilés, alternativement liés en rotation au carter 11 et à la couronne 4. La mise en contact de ces disques de friction 12, entrainant la solidarisation de la couronne 4 et du carter 11 grâce à l'effort de frottement entre les disques, est assurée par un ressort de précharge 13. Pour assurer le débrayage rapide de la couronne, un piston hydraulique de débrayage 14 est prévu.

On décrit ci-après le fonctionnement du dispositif de désaccouplement rapide selon l'invention dans le cadre de d'une marche avant ou arrière normale. L'ensemble du pont arrière fonctionne de manière classique. Le mouvement entre par l'arbre longitudinal 2 et entraine le planétaire 5. La couronne débrayable 4 du train épicycloïdal est alors liée en rotation au carter 11 via les disques de friction 12 du dispositif de liaison débrayable. Le dispositif de liaison débrayable est préchargé par le ressort 13 (dans l'exemple un ressort de type diaphragme). La valeur de démultiplication du train épicycloïdal est choisie proche de la valeur de démultiplication du pont arrière, de sorte que le couple conique 8, 9 se rapproche d'une valeur de réduction de 1, ce qui permet, d'une part, d'obtenir un meilleur rendement mécanique et, d'autre part, de diminuer la vitesse de rotation de l'arbre de transmission longitudinal. La précharge sur l'ensemble des disques de friction 12 lie la couronne 4 au carter 11 avec une valeur de couple légèrement supérieure à celle du couple maximum admissible pour le pont arrière.

Ainsi, lors de la marche normale du véhicule (avant ou arrière), le couple et le mouvement sortent par le porte satellite 6 qui entraine alors le couple pignon 8/ couronne conique 9 et le différentiel arrière 10. Le réglage de la précharge sur les disques de frottement 12, obtenu par le tarage du ressort 13, présente une valeur légèrement supérieure à celle correspondant à l'utilisation maximale du pont arrière. Cela permet ainsi d'utiliser le dispositif débrayable comme un limiteur de couple, avec l'avantage de préserver la durée de vie des pièces internes en cas de surcharge accidentelle.

On décrit ci-après le fonctionnement du dispositif de désaccouplement rapide selon l'invention lorsqu'un blocage de l'essieu arrière se produit, de manière volontaire (par exemple dans le cas d'une conduite de type rallye) ou accidentelle. En cas de blocage de l'essieu arrière, pour désaccoupler le pont arrière de l'arbre longitudinal, on applique une pression sur le piston de débrayage 14. Cette pression libère la précharge axiale des disques de frottement 12, annulant la liaison en rotation de la couronne 4 avec le carter 11. La couronne étant ainsi libre en rotation, il n'y a plus de relation cinématique dans le train épicycloïdal : celui-ci ne transmet plus ni couple ni mouvement au porte-satellite, et donc à l'essieu arrière. On obtient donc, par le simple actionnement du piston de débrayage 14 le désaccouplement entier et rapide du pont arrière lorsque c'est nécessaire.

Dans l'exemple de la figure 1, le dispositif de liaison débrayable est en embrayage à disques de type humide à commande d'effort axial. Bien entendu tout dispositif d'embrayage alternatif peut être utilisé, par exemple :
- un système de disque conique avec une commande d'effort axial ou radial,
- une roue libre avec une bague de désengagement permettant de verrouiller/déverrouiller dans les deux sens de rotation,
- un système rocher/crabot,
- un embrayage à poudre magnétique,
- etc.

L'utilisation d'un train épicycloïdal conformément à l'invention permet donc d'obtenir un dispositif de désaccouplement rapide avantageux, moins couteux qu'es les dispositifs connus De plus, comme l'ensemble des pièces qui constitue le dispositif de débrayage est fixe par rapport au carter, celui-ci ne s'ajoute pas en masse et en inertie à l'ensemble des pièces tournantes. Un autre avantage réside dans l'absence de butées à billes ou à aiguilles qui ne sont pas nécessaires pour la transmission des efforts de compression / décompression axiaux sur les disques de frottement. D'autre part, la gamme de réduction importante offerte par l'utilisation d'un train épicycloïdal permet d'utiliser celui-ci pour la réduction principale du pont arrière, au lieu de l'assurer sur l'engrenage conique d'entrée du différentiel du pont arrière comme sur les dispositifs connus (avec une dégradation du rendement de cet engrenage). Enfin, comme recherché par les inventeurs, l'invention présente l'avantage de réduire grandement l'encombrement du dispositif de désaccouplement.

## Revendications

1. Dispositif d'accouplement entre un arbre de transmission longitudinal (2) et le pont arrière (1) d'un véhicule automobile à quatre roues motrices, le dispositif permettant le désaccouplement de l'arbre de transmission (2) et du pont arrière (1), **caractérisé en ce qu'**il comprend un train épicycloïdal (3) comprenant un carter (11) solidaire du châssis du véhicule, à l'intérieur duquel sont disposés :
- un planétaire (5) lié en rotation à l'arbre longitudinal (2) ;
- un porte-satellite (6) portant un satellite (7) et solidaire d'un pignon conique (8) engrenant avec une couronne conique (9) du pont arrière (1) ;
- une couronne (4) liée en rotation au carter (11) par l'intermédiaire d'un dispositif de liaison débrayable (12, 13, 14).

2. Dispositif selon la revendication 1, dans lequel le dispositif de liaison débrayable est un embrayage.

3. Dispositif selon la revendication 2, dans lequel le dispositif de liaison débrayable est un embrayage à disques de type humide.

4. Dispositif selon la revendication 3, dans lequel le dispositif de liaison débrayable comprend un empilement de disques de friction (11) alternativement liés au carter (11) et à la couronne (4), un ressort de précharge (13) pour que l'embrayage soit en position normalement fermée, et un actionneur hydraulique, tel qu'un piston hydraulique (14), pour ouvrir l'embrayage.

5. Dispositif selon la revendication 4 dans lequel la valeur de tarage du ressort de précharge (13) est supérieure ou égale au couple maximum admissible par le pont arrière.

6. Dispositif selon l'une des revendications précédentes, dans lequel la démultiplication du train épicycloïdal (3) est proche de la démultiplication finale souhaitée pour le pont arrière (1), de sorte que la démultiplication de l'engrenage entre le pignon conique (8) et la couronne conique (9) peut être choisie proche de l'unité.

7. Véhicule automobile à quatre roues motrices, pourvu d'un dispositif selon l'une des revendications précédentes.
